# EUROPEAN PATENT SPECIFICATION

(11) **EP 2 905 309 B1**
(45) Date of publication and mention of the grant of the patent: **14.11.2018**
(21) Application number: 13843499.8
(22) Date of filing: 02.10.2013
(51) Int. Cl.: C08L 23/10, C08F 297/08, C09J 123/12, C08L 23/12, C08L 23/14

(54) **PROPYLENE RESIN COMPOSITION FOR RETORT POUCH-PACKAGING FILM**
PROPYLENHARZZUSAMMENSETZUNG FÜR EINEN RETORTENBEUTEL-VERPACKUNGSFILM
COMPOSITION DE RÉSINE DE PROPYLÈNE POUR FILM D'EMBALLAGE EN SACHET STÉRILISABLE EN AUTOCLAVE

(30) Priority: 03.10.2012 JP 2012221734
(43) Date of publication of application: 12.08.2015
(73) Proprietor: Basell Poliolefine Italia S.r.l., 20121 Milano (IT)
(72) Inventor: KAWAHARADA, Hiroshi, Kawasaki-shi Kanagawa 210-0863 (JP); NAKAJIMA, Takeshi, Kawasaki-shi Kanagawa 210-0863 (JP); MITO, Takatoshi, Kawasaki-shi Kanagawa 210-0863 (JP); KAMIMURA, Akihiro, Kawasaki-shi Kanagawa 210-0863 (JP); AOYAMA, Ryuji, Kawasaki-shi Kanagawa 210-0863 (JP)
(74) Representative: Colucci, Giuseppe
(86) International application number: PCT/JP2013/076781
(87) International publication number: WO 2014/054673

(56) References cited:
- WO-A1-01/92406
- WO-A1-2011/035994
- WO-A1-2011/144489
- WO-A1-2012/120069
- JP-A- 2004 027 212
- JP-A- 2004 027 217
- US-A1- 2007 117 932
- US-A1- 2009 030 098
- US-A1- 2009 264 607
- US-B1- 6 300 415

## Description

### Technical Field

The present invention relates to propylene resin compositions for retort pouch-packaging films. The present invention specifically relates to a propylene resin composition usable as a raw material for a sealant of retort pouch-packaging films which have high sealing characteristics, orange peel resistance, and high wettability, and reduce generation of fish eyes and amounts of low extractables.

### Background Art

Polypropylene has been extensively used in a variety of industrial fields due to its reasonable price, high rigidity, high moisture barrier property, and high heat resistance. In particular, propylene resin compositions are suitable for packaging applications requiring good appearances and high mechanical properties, and have been used in production of shaped articles, particularly sheet articles for packaging of food products and textiles.
PTL 1 discloses an ethylene-propylene copolymer produced through polymerization with a Ziegler-Natta catalyst and a film formed with the copolymer through melt extrusion.
PTL 2 discloses a composition comprising polypropylene and a copolymer elastomer of propylene and ethylene and/or α-olefin having 4 to 12 carbon atoms. Films prepared with the composition have improved balance of impact resistance and rigidity at low temperatures, and also have high transparency and high heat seal strength.
PTL 3 discloses a propylene resin article comprising a heterophasic copolymer of propylene and ethylene and/or an α-olefin having 4 to 12 carbon atoms, and having b-axis orientation observed by wide-angle X-ray diffractometry.
   In these documents, the copolymers are prepared in the presence of Ziegler-Natta solid catalysts (phthalate catalysts) containing diisobutyl phthalate as an internal electron donor. The copolymers prepared through polymerization in the presence of phthalate catalysts have somewhat narrow molecular weight distributions, and have poor dispersion of rubber components in these copolymers. Such characteristics of the copolymers disclosed in these documents are obstacles for elimination of fish eyes.
PTL 4 discloses a solid titanium catalyst composition comprising a cyclic ester compound that functions as an internal electron donor in polymerization of olefin.
PTL 5 discloses a solid titanium catalyst composition comprising an internal electron donor having an ester or diester structure, used for polymerization of olefin.
PTL 6 discloses a catalyst composition comprising a diester compound having a heteroatom selected from heteroatoms of Group 15 in the periodic table functioning as an internal electron donor in polymerization of α-olefin.
PTL 7 discloses a catalyst composition comprising a diester compound having a heteroatom selected from heteroatoms of Group 16 in the periodic table functioning as an internal electron donor in polymerization of α-olefin.
PTL 8 discloses a catalyst composition comprising a succinate compound functioning as an internal electron donor in polymerization of olefin.

While these documents disclose solid catalysts comprising succinate type compounds (compounds having succinate structures), these documents do not mention any use of these catalysts in preparation of polymer compositions having specific characteristics suitable for sealant films for retort pouch-packaging.

### Citation List

### Patent Literature

PTL 1: Japanese Patent Application Laid-Open No. 6-93062
PTL 2: Japanese Patent Application Laid-Open No. 2004-27217
PTL 3: Japanese Patent Application Laid-Open No. 9-316283
PTL 4: WO2009/069483
PTL 5: WO2009/057747
PTL 6: Japanese Patent Application Laid-Open No. 2005-306910
PTL 7: Japanese Patent Application Laid-Open No. 2004-131537
PTL 8: Japanese Unexamined Patent Application Publication (Tokuhyo) No. 2002-542347

### Summary of Invention

### Technical Problem

An object of the present invention is to provide a propylene resin composition comprising a polypropylene prepared through polymerization in the presence of a catalytic system comprising a solid catalyst component containing a succinate type electron donor, Mg, Ti, and a halogen; an alkylaluminum cocatalyst; and a silicon compound, the propylene resin composition having a specific melt flow rate, containing a specific amount of ethylene, and having superior sheet processability and secondary processability. Such a propylene resin composition prepared in the presence of this specific catalyst is suitable for preparation of sealant films suitably used in packaging, particularly retort pouches.

The present invention is characterized by the following aspects:
1. A propylene resin composition, comprising:
   a propylene homopolymer, and
   a propylene-ethylene copolymer dispersed in the propylene homopolymer, the propylene resin composition being prepared through polymerization of propylene and ethylene in the presence of a catalyst, the catalyst comprising:
      (A) a solid catalyst containing, as essential components, magnesium, titanium, a halogen, and an electron donor selected from succinate type compounds,
      (B) an organoaluminum compound, and
      (C) an external electron donor selected from silicon compounds,
   wherein the propylene resin composition contains 25 to 35 wt% ethylene-propylene copolymer,
   the copolymer contains 60 wt% or more propylene,
   the propylene resin composition contains a xylene-soluble component having an intrinsic viscosity [η] of 1.8 to 3.2 dl/g, and
   the propylene resin composition has a melt flow rate of 2.0 to 5.0 g/10 min.
2. A sealant film for retort pouch-packaging films, prepared with the propylene resin composition according to Aspect 1.

The present invention will now be described in detail.

### Solution to Problem

The propylene resin composition according to the present invention will now be described. The present invention relates to a propylene resin composition comprising a propylene homopolymer, and a propylene-ethylene copolymer dispersed in the propylene homopolymer, the propylene resin composition being prepared through copolymerization of propylene and ethylene in the presence of a catalyst comprising:
(A) a solid catalyst containing, as essential components, magnesium, titanium, halogen, and an electron donor selected from succinate type compounds;
(B) an organoaluminum compound, and
(C) an external electron donor selected from silicon compounds,
wherein the propylene resin composition contains 25 to 35 wt% ethylene-propylene copolymer,
the copolymer contains 60 wt% or more propylene,
the propylene resin composition contains a xylene-soluble component having an intrinsic viscosity [η] of 1.8 to 3.2 dl/g, and
the propylene resin composition has a melt flow rate of 2.0 to 5.0 g/10 min.

The catalyst used in preparation of the propylene resin composition according to the present invention comprises (A) a solid catalyst containing, as essential components, magnesium, titanium, halogen, and an electron donor selected from succinate type compounds; (B) an organoaluminum compound; and (C) an external electron donor selected from silicon compounds.

The component (A) or solid catalyst component used in preparation of the propylene resin composition according to the present invention contains magnesium, titanium, halogen, and an electron donor, as essential components. Many documents disclose the methods of preparing such a solid catalyst component. Specifically, the solid catalyst component is prepared through mutual contact of a magnesium compound, a titanium compound, and an electron donor. Examples of the methods include (1) a method of optionally pulverizing a magnesium compound or a complex of a magnesium compound and an electron donor in the presence of or in the absence of an electron donor and a milling aid, and optionally pretreating the product with an electron donor and/or a reaction accelerator, such as an organoaluminum compound and a halogen-containing silicon compound, to prepare a solid product, and reacting the solid product with a liquid titanium compound under a reaction condition; (2) a method of reacting a liquid magnesium compound with a liquid titanium compound, optionally in the presence of an electron donor to precipitate a solid titanium composite; (3) a method of reacting a solid magnesium compound with a liquid titanium compound and an electron donor; (4) a method of further reacting the product prepared in method (2) or (3) with a titanium compound; (5) a method of further reacting the product prepared in method (1), (2), or (3) with an electron donor and a titanium compound; (6) a method of pulverizing a magnesium compound or a complex of a magnesium compound and an electron donor, optionally in the presence of an electron donor and a milling aid and in the presence of a titanium compound, and optionally pretreating the milled product with an electron donor and/or a reaction accelerator, such as an organoaluminum compound and a halogen-containing silicon compound, to prepare a solid product, and treating the solid product with an elemental halogen, a halogen compound, or an aromatic hydrocarbon; and (7) a method of treating the compound prepared in one of methods (1) to (5) with a halogen, a halogen compound, or an aromatic hydrocarbon. The component (A) or solid catalyst component used in the present invention can be prepared by any of these methods.

Preferred titanium compounds used in preparation of the solid catalyst component (A) used in preparation of the propylene resin composition according to the present invention are quadrivalent titanium compounds represented by Formula: Ti(OR)_{g}X_{4-g}, where R represents a hydrocarbon group; X represents a halogen; 0≤g≤4. Specific examples thereof include tetrahalogenated titanium compounds, such as TiCl₄, TiBr₄, and TiI₄; trihalogenated alkoxytitanium compounds, such as Ti(OCH₃)Cl₃, Ti(OC₂H₅)Cl₃, Ti(Oₙ-C₄H₉)Cl₃, Ti(OC₂H₅)Br₃, and Ti(OisoC₄H₉)Br₃; dihalogenated alkoxytitanium compounds, such as Ti(OCH₃)₂Cl₂, Ti(OC₂H₅)₂Cl₂, Ti(Oₙ-C₄H₉)₂Cl₂, and Ti(OC₂H₅)₂Br₂; monohalogenated trialkoxytitanium compounds, such as Ti(OCH₃)₃Cl, Ti(OC₂H₅)₃Cl, Ti(Oₙ-C₄H₉)₃Cl, and Ti(OC₂H₅)₃Br; and tetraalkoxytitanium compounds, such as Ti(OCH₃)₄, Ti(OC₂H₅)₄, and Ti(Oₙ-C₄H₉)₄. Among these compounds, preferred are halogen-containing titanium compounds, particularly tetrahalogenated titanium compounds. More preferred is titanium tetrachloride.

Examples of the magnesium compound used in preparation of the solid catalyst component (A) for preparation of the propylene resin composition according to the present invention include magnesium compounds having at least one magnesium-carbon bond or a magnesium-hydrogen bond, such as dimethylmagnesium, diethylmagnesium, dipropylmagnesium, dibutylmagnesium, diamylmagnesium, dihexylmagnesium, didecylmagnesium, ethylmagnesium chloride, propylmagnesium chloride, butylmagnesium chloride, hexylmagnesium chloride, amylmagnesium chloride, butylethoxymagnesium, ethylbutylmagnesium, and butylmagnesium hydride. These magnesium compounds can also be used in the form of a complex with an organoaluminum compound, for example. These magnesium compounds may be liquid or solid. Further examples of suitable magnesium compounds include halogenated magnesium compounds, such as magnesium chloride, magnesium bromide, magnesium iodide, and magnesium fluoride; alkoxymagnesium halides, such as methoxymagnesium chloride, ethoxymagnesium chloride, isopropoxymagnesium chloride, butoxymagnesium chloride, and octoxymagnesium chloride; allyloxymagnesium halides, such as phenoxymagnesium chloride and methylphenoxymagnesium chloride; alkoxymagnesium compounds, such as ethoxymagnesium, isopropoxymagnesium, butoxymagnesium, n-octoxymagnesium, and 2-ethylhexoxymagnesium; allyloxymagnesium compounds, such as phenoxymagnesium and dimethylphenoxymagnesium; and carboxylic salts of magnesium, such as magnesium laurate and magnesium stearate.

The electron donor used in preparation of the solid catalyst component (A) for preparation of the propylene resin composition according to the present invention is generally referred to as "internal electron donor". Examples of known electron donors include oxygen-containing electron donors, such as alcohols, phenols, ketones, aldehydes, carboxylic acids, esters of organic or inorganic acids, ethers, acid amides, and acid anhydrides; and nitrogen-containing electron donors, such as ammonia, amines, nitriles, and isocyanates. Succinate type electron donors are used in the present invention.

A suitable succinate type compound is selected from compounds having a succinate structure represented by Formula I: 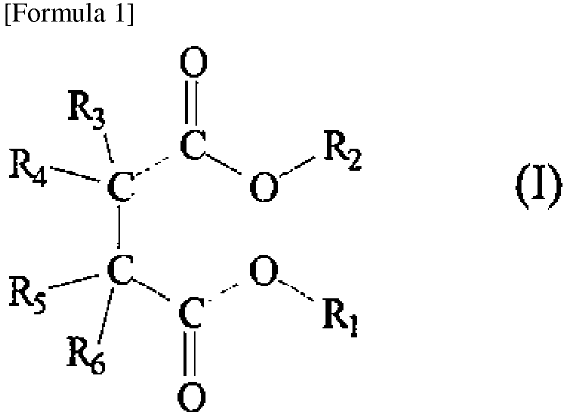 where R₁ and R₂ represent a C₁ to C₂₀ linear or branched alkyl, alkenyl, cycloalkyl, aryl, arylalkyl, or alkylaryl group which may have an optional heteroatom, and R₁ and R₂ may be the same or different; R₃ to R₆ each represent hydrogen or a C₁ to C₂₀ linear or branched alkyl, alkenyl, cycloalkyl, aryl, arylalkyl, or alkylaryl group, optionally containing heteroatoms, and R₃ to R₆ may be the same or different; R₃ to R₆ bonded to the same carbon atom or different carbon atoms may be bonded to each other to form a ring.

R₁ and R₂ are preferably C₁ to C₈ alkyl, cycloalkyl, and aryl, arylalkyl, and alkyl aryl groups. R₁ and R₂ are more preferably selected from primary alkyl groups, particularly branched primary alkyl groups. Examples of the suitable groups for R₁ and R₂ include methyl, ethyl, n-propyl, n-butyl, isobutyl, neopentyl, and 2-ethylhexyl. Particularly preferred are ethyl, isobutyl, and neopentyl.

In one preferred group of compounds represented by Formula (I), R₃ to R₅ are hydrogen, and R₆ is a branched alkyl group, a cycloalkyl group, an aryl group, an arylalkyl group, or an alkylaryl group, having 3 to 10 carbon atoms. Specific examples of suitable monosubstituted succinate type compounds include diethyl sec-butylsuccinate, diethyl thexylsuccinate, diethyl cyclopropylsuccinate, diethyl norbornylsuccinate, diethyl perhydrosuccinate, diethyl trimethylsilylsuccinate, diethyl methoxysuccinate, diethyl p-methoxyphenylsuccinate, diethyl p-chlorophenylsuccinate, diethyl phenylsuccinate, diethyl cyclohexylsuccinate, diethyl benzylsuccinate, diethyl cyclohexylmethylsuccinate, diethyl t-butylsuccinate, diethyl isobutylsuccinate, diethyl isopropylsuccinate, diethyl neopentylsuccinate, diethyl isopentylsuccinate, diethyl (1-trifluoromethylethyl)succinate, diethyl fluorenylsuccinate, 1-(ethoxycarbodiisobutylphenyl)succinate, diisobutyl sec-butylsuccinate, diisobutyl thexylsuccinate, diisobutyl cyclopropylsuccinate, diisobutyl norbornylsuccinate, diisobutyl perhydrosuccinate, diisobutyl trimethylsilylsuccinate, diisobutyl methoxysuccinate, diisobutyl p-methoxyphenylsuccinate, diisobutyl p-chlorophenylsuccinate, diisobutyl cyclohexylsuccinate, diisobutyl benzylsuccinate, diisobutyl cyclohexylmethylsuccinate, diisobutyl t-butylsuccinate, diisobutyl isobutylsuccinate, diisobutyl isopropylsuccinate, diisobutyl neopentylsuccinate, diisobutyl isopentylsuccinate, diisobutyl (1-trifluoromethylethyl)succinate, diisobutyl fluorenylsuccinate, dineopentyl sec-butylsuccinate, dineopentyl thexylsuccinate, dineopentyl cyclopropylsuccinate, dineopentyl norbornylsuccinate, dineopentyl perhydrosuccinate, dineopentyl trimethylsilylsuccinate, dineopentyl methoxysuccinate, dineopentyl p-methoxyphenylsuccinate, dineopentyl p-chlorophenylsuccinate, dineopentyl phenylsuccinate, dineopentyl cyclohexylsuccinate, dineopentyl benzylsuccinate, dineopentyl cyclohexylmethylsuccinate, dineopentyl t-butylsuccinate, dineopentyl isobutylsuccinate, dineopentyl isopropylsuccinate, dineopentyl neopentylsuccinate, dineopentyl isopentylsuccinate, dineopentyl (1-trifluoromethylethyl)succinate, and dineopentyl fluorenylsuccinate.

In other preferred groups of the compounds represented by Formula (I), at least two of R₃ to R₆ are different from hydrogen and are selected from C₁ to C₂₀ linear or branched alkyl, alkenyl, cycloalkyl, aryl, arylalkyl, and alkyl aryl groups optionally having heteroatoms. Particularly preferred are compounds in which two groups different from hydrogen are bonded to the same carbon atom. Specific examples of suitable disubstituted succinate type compounds are diethyl 2,2-dimethylsuccinate, diethyl 2-ethyl-2-methylsuccinate, diethyl 2-benzyl-2-isopropylsuccinate, diethyl 2-cyclohexylmethyl-2-isobutylsuccinate, diethyl 2-cyclopentyl-2-n-propylsuccinate, diethyl 2-cyclopentyl-2-n-butylsuccinate, diethyl 2,2-diisobutylsuccinate, diethyl 2-cyclohexyl-2-ethylsuccinate, diethyl 2-isopropyl-2-methylsuccinate, diethyl 2-tetradecyl-2-ethylsuccinate, diethyl 2-isobutyl-2-ethylsuccinate, diethyl 2-(1-trifluoromethylethyl)-2-methylsuccinate, diethyl 2-isopentyl-2-isobutylsuccinate, diethyl 2-phenyl-2-n-butylsuccinate, diisobutyl 2,2-dimethylsuccinate, diisobutyl 2-ethyl-2-methylsuccinate, diisobutyl 2-benzyl-2-isopropylsuccinate, diisobutyl 2-cyclohexylmethyl-2-isobutylsuccinate, diisobutyl 2-cyclopentyl-2-n-propylsuccinate, diisobutyl 2-cyclopentyl-2-n-butylsuccinate, diisobutyl 2,2-diisobutylsuccinate, diisobutyl 2-cyclohexyl-2-ethylsuccinate, diisobutyl 2-isopropyl-2-methylsuccinate, diisobutyl 2-tetradecyl-2-ethylsuccinate, diisobutyl 2-isobutyl-2-ethylsuccinate, diisobutyl 2-(1-trifluoromethylethyl)-2-methylsuccinate, diisobutyl 2-isopentyl-2-isobutylsuccinate, diisobutyl 2-phenyl-2-n-butylsuccinate, diisobutyl 2,2-diisopropylsuccinate, diisobutyl 2-phenyl-2-n-propylsuccinate, dineopentyl 2,2-dimethylsuccinate, dineopentyl 2-ethyl-2-methylsuccinate, dineopentyl 2-benzyl-2-isopropylsuccinate, dineopentyl 2-cyclohexylmethyl-2-isobutylsuccinate, dineopentyl 2-cyclopentyl-2-n-propylsuccinate, dineopentyl 2-cyclopentyl-2-n-butylsuccinate, dineopentyl 2,2-diisobutylsuccinate, dineopentyl 2-cyclohexyl-2-ethylsuccinate, dineopentyl 2-isopropyl-2-methylsuccinate, dineopentyl 2-tetradecyl-2-ethylsuccinate, dineopentyl 2-isobutyl-2-ethylsuccinate, dineopentyl 2-(1-trifluoromethylethyl)-2-methylsuccinate, dineopentyl 2,2-diisopropylsuccinate, dineopentyl 2-isopentyl-2-isobutylsuccinate, and dineopentyl 2-phenyl-2-n-butylsuccinate.

Also particularly preferred are compounds in which two of R₃ to R₆ are different from hydrogen and are bonded to different carbon atoms. Specific examples of suitable compounds include diethyl 2,3-bis(trimethylsilyl)succinate, diethyl 2,2-sec-butyl-3-methylsuccinate, diethyl 2-(3,3,3-trifluoropropyl)-3-methylsuccinate, diethyl 2,3-bis(2-ethylbutyl)succinate, diethyl 2,3-diethyl-2-isopropylsuccinate, diethyl 2,3-diisopropyl-2-methylsuccinate, diethyl 2,3-dicyclohexyl-2-methylsuccinate, diethyl 2,3-dibenzylsuccinate, diethyl 2,3-diisopropylsuccinate, diethyl 2,3-bis(cyclohexylmethyl)succinate, diethyl 2,3-di-t-butylsuccinate, diethyl 2,3-diisobutylsuccinate, diethyl 2,3-dineopentylsuccinate, diethyl 2,3-diisopentylsuccinate, diethyl 2,3-(1-trifluoromethylethyl)succinate, diethyl 2,3-tetradecylsuccinate, diethyl 2,3-fluorenylsuccinate, diethyl 2-isopropyl-3-isobutylsuccinate, diethyl 2-tert-butyl-3-isopropylsuccinate, diethyl 2-isopropyl-3-cyclohexylsuccinate, diethyl 2-isopentyl-3-cyclohexylsuccinate, diethyl 2-tetradecyl-3-cyclohexylmethylsuccinate, diethyl 2-cyclohexyl-3-cyclopentylsuccinate, diethyl 2,2,3,3-tetramethylsuccinate, diethyl 2,2,3,3-tetraethylsuccinate, diethyl 2,2,3,3-tetrapropylsuccinate, diethyl 2,3-diethyl-2,3-diisopropylsuccinate, diisobutyl 2,3-bis(trimethylsilyl)succinate, diisobutyl 2,2-sec-butyl-3-methylsuccinate, diisobutyl 2-(3,3,3-trifluoropropyl)-3-methylsuccinate, diisobutyl 2,3-bis(2-ethylbutyl)succinate, diisobutyl 2,3-diethyl-2-isopropylsuccinate, diisobutyl 2,3-diisopropyl-2-methylsuccinate, diisobutyl 2,3-dicyclohexyl-2-methylsuccinate, diisobutyl 2,3-dibenzylsuccinate, diisobutyl 2,3-diisopropylsuccinate, diisobutyl 2,3-bis(cyclohexylmethyl)succinate, diisobutyl 2,3-di-t-butylsuccinate, diisobutyl 2,3-diisobutylsuccinate, diisobutyl 2,3-dineopentylsuccinate, diisobutyl 2,3-diisopentylsuccinate, diisobutyl 2,3-(1-trifluoromethylethyl)succinate, diisobutyl 2,3-n-propylsuccinate, diisobutyl 2,3-tetradecylsuccinate, diisobutyl 2,3-fluorenylsuccinate, diisobutyl 2-isopropyl-3-isobutylsuccinate, diisobutyl 2-tert-butyl-3-isopropylsuccinate, diisobutyl 2-isopropyl-3-cyclohexylsuccinate, diisobutyl 2-isopentyl-3-cyclohexylsuccinate, diisobutyl 2-n-propyl-3-(cyclohexylmethyl)succinate, diisobutyl 2-tetradecyl-3-cyclohexylmethylsuccinate, diisobutyl 2,2,3,3-tetramethylsuccinate, diisobutyl 2,2,3,3-tetraethylsuccinate, diisobutyl 2,2,3,3-tetrapropylsuccinate, diisobutyl 2,3-diethyl -2,3-diisopropylsuccinate, diisobutyl 2-cyclohexyl-3-cyclopentylsuccinate, dineopentyl 2,3-bis(trimethylsilyl)succinate, dineopentyl 2,2-sec-butyl-3-methylsuccinate, dineopentyl 2-(3,3,3-trifluoropropyl)-3-methylsuccinate, dineopentyl 2,3-bis(2-ethylbutyl)succinate, dineopentyl 2,3-diethyl-2-isopropylsuccinate, dineopentyl 2,3-diisopropyl-2-methylsuccinate, dineopentyl 2,3-dicyclohexyl-2-methylsuccinate, dineopentyl 2,3-benzylsuccinate, dineopentyl 2,3-diisopropylsuccinate, dineopentyl 2,3-bis(cyclohexylmethyl)succinate, dineopentyl 2,3-di-t-butylsuccinate, dineopentyl 2,3-diisobutylsuccinate, dineopentyl 2,3-dineopentylsuccinate, dineopentyl 2,3-diisopentylsuccinate, dineopentyl 2,3-(1-trifluoromethylethyl)succinate, dineopentyl 2,3-dineopentylsuccinate, dineopentyl 2,3-diisopentylsuccinate, dineopentyl 2,3-tetradecylsuccinate, dineopentyl 2,3-fluorenylsuccinate, dineopentyl 2-isopropyl-3-isobutylsuccinate, dineopentyl 2-tert-butyl-3-isopropylsuccinate, dineopentyl 2-isopropyl-3-cyclohexylsuccinate, dineopentyl 2-isopentyl-3-cyclohexylsuccinate, dineopentyl 2-tetradecyl-3-cyclohexylmethylsuccinate, dineopentyl 2-n-propyl-3-(cyclohexylmethyl)succinate, dineopentyl 2-cyclohexyl-3-cyclopentylsuccinate, dineopentyl 2,2,3,3-tetraethylsuccinate, dineopentyl 2,2,3,3-tetrapropylsuccinate, and dineopentyl 2,3-diethyl-2,3-diisopropylsuccinate.

Among these compounds represented by Formula I, also preferred are compounds in which some of R₃ to R₆ are bonded to each other to form a ring. Examples thereof include compounds disclosed in PTL 8, such as 1-(ethoxycarbonyl)-1-(ethoxyacetyl)-2,6-dimethylcyclohexane, 1-(ethoxycarbonyl)-1-(ethoxyacetyl)-2,5-dimethylcyclopentane, 1-(ethoxycarbonyl)-1-(ethoxyacetylmethyl)-2-methylcyclohexane, and 1-(ethoxycarbonyl)-1-(ethoxy(cyclohexyl)acetyl)cyclohexane. Furthermore, cyclic succinate type compounds disclosed in PTL 4 can be suitably used, for example.

Other preferred examples of the cyclic succinate type compound include compounds disclosed in PTL 5.

Among these compounds represented by Formula I, if any one of R₃ to R₆ has a heteroatom, the heteroatom is preferably an atom of Group 15 in the periodic table, such as nitrogen and phosphorus atoms or an atom of Group 16 in the periodic table, such as oxygen and sulfur atoms. Examples of the compound having an atom of Group 15 in R₃ to R₆ include compounds disclosed in PTL 6. Examples of the compound having an atom of Group 16 in R₃ to R₆ include compounds disclosed in PTL 7.

Examples of halogen atoms included in the solid catalyst component used in preparation of the propylene resin composition according to the present invention include fluorine, chlorine, bromine, iodine, or mixtures thereof. Particularly preferred is chlorine.

The component (B) or organoaluminum compound used in preparation of the propylene resin composition according to the present invention can be selected from trialkylaluminum compounds, such as triethylaluminum and tributylaluminum; trialkenylaluminum compounds, such as triisoprenylaluminum; dialkylaluminum alkoxides, such as diethylaluminum ethoxide and dibutylaluminum butoxide; alkylaluminum sesquialkoxides, such as ethylaluminum sesquiethoxide and butylaluminum sesquibutoxide; partially alkoxylated alkylaluminum having an average composition represented by R¹_{2.5}Al(OR²)_{0.5}; dialkylaluminum halogenides, such as diethylaluminum chloride, dibutylaluminum chloride, and diethylaluminum bromide; alkylaluminum sesquihalogenides, such as ethylaluminum sesquichloride, butylaluminum sesquichloride, and ethylaluminum sesquibromide; partially halogenated alkylaluminum compounds, such as alkylaluminum dihalogenides e.g., ethylaluminum dichloride, propylaluminum dichloride, and butylaluminum dibromide); dialkylaluminum hydrides, such as diethylaluminum hydride and dibutylaluminum hydride; partially hydrogenated alkylaluminum compounds, such as alkylaluminum dihydrides (e.g., ethylaluminum dihydride and propylaluminum dihydride); and partially alkoxylated and halogenated alkylaluminum compounds, such as ethylaluminum ethoxychloride, butylaluminum butoxychloride, and ethylaluminum ethoxybromide.

The component (C) or electron donor used in preparation of the propylene resin composition according to the present invention is generally referred to as "external electron donor." Preferred electron donors are organosilicon compounds. Examples of such preferred organosilicon compounds include trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bisethylphenyldimethoxysilane, dicyclopentyldimethoxysilane, dicyclohexyldimethoxysilane, cyclohexylmethyldimethoxysilane, cyclohexylmethyldiethoxysilane, ethyltrimethoxysilane, ethyltriethoxysilane, vinyltrimethoxysilane, methyltrimethoxysilane, n-propyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, t-butyltriethoxysilane, thexyltrimethoxysilane, n-butyltriethoxysilane, iso-butyltriethoxysilane, phenyltriethoxysilane, γ-aminopropyltriethoxysilane, chlorotriethoxysilane, ethyltriisopropoxysilane, vinyltributoxysilane, cyclohexyltrimethoxysilane, cyclohexyltriethoxysilane, 2-norbornanetrimethoxysilane, 2-norbornanetriethoxysilane, 2-norbornanemethyldimethoxysilane, ethyl silicate, butyl silicate, trimethylphenoxysilane, methyltriallyloxysilane, vinyl-tris(P-methoxyethoxysilane), vinyltriacetoxysilane, and dimethyltetraethoxydisiloxane. Among these compounds, preferred are ethyltriethoxysilane, n-propyltriethoxysilane, t-butyltriethoxysilane, thexyltrimethoxysilane, vinyltriethoxysilane, phenyltriethoxysilane, vinyltributoxysilane, diphenyldimethoxysilane, diisopropyldimethoxysilane, dicyclopentyldimethoxysilane, cyclohexylmethyldimethoxysilane, phenylmethyldimethoxysilane, bis-p-tolyldimethoxysilane, p-tolylmethyldimethoxysilane, dicyclohexyldimethoxysilane, cyclohexylmethyldimethoxysilane, 2-norbornanetriethoxysilane, 2-norbornanemethyldimethoxysilane, diphenyldiethoxysilane, and ethyl silicate.

The content [BIPO] of the ethylene-propylene copolymer in the propylene resin composition according to the present invention is 25 to 35 wt%. The propylene content in the copolymer is 60 wt% or more of the weight of the copolymer. A propylene content of less than 60 wt% results in a sealant film having increased fish eyes and reduced impact strength.

The propylene resin composition according to the present invention has a melt flow rate [MFR] at 230°C of 2.0 to 5.0 g/10 min, preferably 2.0 to 4.5 g/10 min, more preferably 2.0 to 4.0 g/10 min. A melt flow rate of less than 2.0 has adverse effects on the productivity and the quality of the film, such as increased internal pressure of a T-die film forming machine during processing of a sealant film from the resin or inferior smoothness of the surface of the resulting film. A melt flow rate of more than 5.0 may significantly reduce the strength, particularly impact strength of the film.

The propylene resin composition according to the present invention contains a xylene-insoluble component having a wide molecular weight distribution [Mw/Mn] ranging from 6.5 to 10, preferably 7 to 9. Such a molecular weight distribution of the xylene-insoluble component in the propylene resin composition suggests that not only the polypropylene homopolymer component but also the copolymer component have wide molecular weight distributions, which will improve the dispersion of the polypropylene homopolymer and the copolymer. At a molecular weight distribution of less than 6.5, the propylene homopolymer component and the copolymer component are not sufficiently dispersed, leading to an increase in fish eyes generated in the sealant film. Such a narrow molecular weight distribution also increases the melt viscosity of the propylene resin composition to readily generate shearing heat in the screw of an extruder during extrusion of the composition for formation of the film. Such an increased melt viscosity may lead to degradation or unstable extrusion of the resin. A molecular weight distribution of more than 10 increases low molecular weight resins, which in turn may increase the amount of resins eluted into the contents in packages containing such a propylene resin composition to cause hygienic problems. The propylene resin composition according to the present invention having such a wide molecular weight distribution reduces fish eyes, which are generated due to the copolymer component in sealant films prepared with the propylene resin composition, more significantly than other propylene resin compositions having the melt flow rate [MFR], the content [BIPO] of the propylene-ethylene copolymer in the propylene resin composition, and the intrinsic viscosity [XSIV] of the xylene-soluble content in the propylene resin composition, which are equal to those of the propylene resin composition according to the present invention.

The propylene resin composition according to the present invention improves dispersion of the propylene homopolymer component and the copolymer component, and thereby can reduce fish eyes in the sealant films prepared with such a propylene resin composition. This improved dispersion can attain an appropriate intrinsic viscosity of the copolymer component (i.e., intrinsic viscosity [XSIV] of the xylene-soluble content). A strong correlation is known between the intrinsic viscosity of the xylene-soluble content in the propylene resin composition and the heat seal strength of the film prepared with the propylene resin composition, and a larger value of XSIV indicates higher heat seal strength of the film. In the present invention, XSIV is 1.8 to 3.2 dL/g, and preferably 1.9 to 3.0 dL/g.

A wide molecular weight distribution of the xylene-insoluble component in the propylene resin composition according to the present invention indicates that both the propylene homopolymer component and the copolymer component contain relatively large amounts of high-molecular weight polymer molecules. From the experiments using films prepared with the propylene resin composition according to the present invention and subjected to a corona discharge treatment, the present inventors have confirmed that a propylene resin composition containing a copolymer component having a higher intrinsic viscosity enhances the wetting tension of the resulting film. Such enhanced wetting tension of the film, in turn, can attain enhanced lamination strength during dry lamination, which can achieve a film having stable seal strength and an orange peel resistance. In conclusion, the propylene resin composition according to the present invention having a wide molecular weight distribution of the xylene-insoluble component and a high intrinsic viscosity of the copolymer component can achieve a highly-functional sealant film for retort pouches.

The propylene resin composition according to the present invention can additionally contain typical additives used in oil-extended and other olefin polymers (such as nucleating agents, antioxidants, hydrochloric acid absorbents, heat stabilizers, light stabilizers, ultraviolet absorbers, internal lubricants, external lubricants, antistatic agents, flame retardants, dispersants, copper inhibitors, neutralizers, plasticizers, foaming agents, antifoaming agents, crosslinking agents, and peroxides) and organic or inorganic pigments.

### Advantageous Effects of Invention

The present invention can provide a propylene resin composition having high processability that ensures stable production of films, and a sealant film for retort pouches that is prepared with the propylene resin composition and has high seal strength.

### Description of Embodiments

A process of preparing the propylene resin composition according to the present invention will now be described in detail.

A polypropylene polymer as a raw material for the propylene resin composition according to the present invention is prepared by a known slurry process (polymerization in a liquid monomer) or gaseous phase polymerization process. Preferred is a sequential polymerization process comprising at least two sequential polymerization stages in which each subsequent polymerization stage is performed in the presence of a polymerizable substance prepared through the preceding polymerization stage. The ethylene-propylene copolymer is prepared as follows: in the presence of the propylene homopolymer prepared in the preceding stage, a propylene monomer, an ethylene monomer, hydrogen, and an optional catalyst are placed in a polymerization reactor to copolymerize the propylene monomer and the ethylene monomer.

A polypropylene polymer is prepared in a polymerization reactor that can generate concentration gradients of monomers and/or gradients of polymerization conditions. For example, such a polymerization reactor includes at least two gaseous phase polymerization zones connected to each other. Specifically, a monomer is fed in a polymerization zone consisting of a riser for polymerization in the presence of a catalyst. The monomer is fed through a down-comer connected to the riser for polymerization. The resulting polymer product is collected while being circulated through the riser and the down-comer. In this process, the reactor is provided with a unit for entirely or partially preventing invasion of the gas mixture in the riser into the down-comer. A gas and/or liquid mixture having a different composition from that of the gas mixture in the riser is introduced into the down-comer.

Usable examples of the polymerization process include a process described in Japanese Unexamined Patent Application Publication (Tokuhyo) No. 2002-520426.

The polymerization stages are performed in the presence of a stereospecific Ziegler-Natta catalyst. In a preferred embodiment, all of the polymerization stages are performed in the presence of a catalyst comprising (A) a solid catalyst containing, as essential components, magnesium, titanium, halogen, and an electron donor selected from succinate type compounds; (B) an organoaluminum compound; and (C) an external electron donor selected from silicon compounds. Such a catalyst is found in patent documents. Each of the polymerization stages can be performed in a liquid phase, a gaseous phase, or a solution-gaseous phase. The reaction temperature may be the same or different through the polymerization stage for preparing the polypropylene polymer, and ranges preferably from 40 to 100°C, more preferably from 50 to 80°C, most preferably from 70 to 80°C. The pressure in the polymerization stage for preparing the polypropylene polymer competes with the vapor pressure of liquid propylene monomer at the operating temperature. The pressure may be adjusted by the vapor pressure of a small amount of an inert diluent used to feed the catalyst mixture, by excess pressure applied to optional monomers, or by hydrogen used as a molecular weight regulator.

The polymerization pressure ranges from preferably 33 to 43 bars in polymerization in a liquid phase, and ranges from 5 to 30 bars in polymerization in a gaseous phase. A known molecular weight regulator typically used in the art, such as a chain transfer agent (e.g., hydrogen or ZnEt₂) can be used.

### Examples

The present invention will now be described in more detail by way of Examples. In Examples, each sample was evaluated by the following methods.

### [MFR]

MFR was determined at a temperature of 230°C under a load of 21.18 N in accordance with JIS K 7210.

### [Concentration of propylene in copolymer]

A sample dissolved in a mixed solvent of 1,2,4-trichlorobenzene and deuterated benzene was measured with a ¹³C-NMR spectrometer JNM LA-400 available from JEOL, Ltd. (¹³C resonance frequency: 100 MHz) to determine the concentration of propylene in the copolymer.

### [Xylene-insoluble content]

A propylene resin composition (2.5 g) was placed in a flask containing an o-xylene (250 mL) solvent. The flask with a reflux unit was placed on a hot plate. While the flask was being purged with nitrogen, the resin composition was stirred at 135°C for 30 minutes to be completely dissolved, and was cooled at 25°C for one hour. The solution was filtered through a filtering paper. Acetone was added to the residue (mixture of a xylene-insoluble content and the solvent) on the filtering paper, and the solution was filtered. The remaining, unfiltered substance was evaporated into dryness in a vacuum oven at 80°C to give a xylene-insoluble content.

### [Xylene-soluble content]

In the separation of the xylene-insoluble content, the filtrate (100 mL) was collected, and was placed in an aluminum cup. While the cup was purged with nitrogen, the filtrate was evaporated into dryness at 140°C, and was left to stand at room temperature for 30 minutes to give the xylene-soluble content.

### [XSIV]

A sample of the xylene-soluble content was measured in 135°C tetrahydronaphthalene with an Ubbelohde viscometer to determine the intrinsic viscosity.

### [Mw/Mn of xylene-insoluble content]

The molecular weight distribution (Mw/Mn) of the xylene-insoluble content was determined as follows:
In a GPC system, PL-GPC 220 available from Polymer Laboratories Ltd., a solution of 1,2,4-trichlorobenzene containing an antioxidant was used as a mobile phase, and UT-G (one column), UT-807 (one column), and UT-806M (two columns) available from Showa Denko K.K. were connected in series. A differential refractometer was used as a detector. The xylene-insoluble content was dissolved in the same solvent as the mobile phase at 150°C for two hours by shaking to prepare a sample solution (concentration: 1 mg/mL). The sample solution (500 µL) was injected to the columns, and was measured at a flow rate of 1.0 mL/min, a temperature of 145°C, and a data uptake interval of 1 second. For calibration of the columns, calibration curves were produced with polystyrene standard samples having molecular weights of 580 to 7450000 (Shodex STANDARD, available from Showa Denko K.K.) by cubic spline. Mark-Houwink coefficients K = 1.21×10⁻⁴ and α = 0.707 were used for polystyrene standard samples, and K = 1.37×10⁻⁴ and α = 0.75 for the polypropylene polymer.

### [Extrusion stability]

T-die extrusion: a film was produced with an extruder having a T- die with a diameter of 25 mm available from Yoshii Tekko (cylinder temperature: 230°C, die temperature: 250°C, extrusion rate: 5.6 m/min while the thickness was being adjusted to 60 µm with a chill roll at 30°C.

Inflation process: a film was processed with an inflation machine with a diameter of 55 mm available from Placo Co., Ltd. (cylinder temperature: 230°C, die temperature: 250°C, blow ratio: 2.2, film width: 350 mm, extrusion rate: 30 m/min while the thickness was being adjusted to 60 µm.

The films were visually evaluated according to the following criteria:
A: Film was successfully prepared
B: Uneven films, unstable bubbles, fluctuated width, and uneven extrusion were found
C: Film was not prepared

### [Seal strength]

A sample film was thermally bonded to a backing material (dry laminate film consisting of a 60-µm polypropylene cast film, an 8-µm adhesive layer, and a 12-µm poly(ethylene terephthalate) film (total thickness: 80 µm)) at 0.2 MPa for 1 second with a heat sealer available from TESTER SANGYO CO,. LTD, and the laminate was cooled in ice water to prepare a heat-sealed sample. The seal strength was measured in accordance with JIS K7127 Plastics: Tensile Test Method, Part 3: Test Conditions on Films and Sheets.

### [Impact resistance]

The impact resistance was determined as follows:
A film impact tester with a thermostatic bath made by Toyo Seiki Seisaku-sho, Ltd. was used, and the inner temperature of the thermostatic bath was set at -5°C. A sample was held with an air chuck in the thermostatic bath, and an impact (n = 10 or more) was applied to the film with a pendulum. The decay of energy was read with a digital apparatus, and the average was defined as impact strength.

### [Wettability]

A sample film was subjected to a corona discharge treatment with a corona treatment apparatus available from KASUGA ELECTRIC WORKS CO. LTD., and the initial wetting tension of the sample was adjusted to 50 mN/m. The sample was placed in an oven at 40°C for 24 hours. The sample was then taken out from the oven, and was left to stand at room temperature. After three days, the wetting tension was measured. The wetting tension was determined by a method in accordance with JIS K6768.

### [The number of fish eyes]

In a sample film of 30 cm square, the number of fish eyes of 0.1 mm or less generated in an area of 0.1 m² was visually counted with a scale loupe.

### [Retort test]

A sample film was thermally sterilized with hot water at 121 °C for 30 minutes in a retort tester available from HISAKA WORKS, LTD.

### (1) Preparation of solid catalyst component

A solid catalyst was prepared according to the method described in Examples in Japanese Patent Application Laid-Open No. 2011-500907, as follows:
A 500 mL four-necked round-bottomed flask was purged with nitrogen, and TiCl₄ (250 mL) was introduced into the flask at 0°C. Microspheroidal MgCl₂·1.8C₂H₅OH (10.0 g, prepared by the same method as in Example 2 of USP-4,399,054 except that operation was performed at 3000 rpm instead of 10000 rpm), and diethyl 2,3-(diisopropyl)succinate (9.1 mmol) were added with stirring. The mixture was heated to 100°C, and was kept for 120 minutes. The stirring was discontinued, the solid product was allowed to settle and supernatant liquid was siphoned off. In the next step, the following operation was repeated twice: TiCl₄ (250 mL) was further added, the mixture was reacted at 120°C for 60 minutes, and the supernatant liquid was siphoned off. The solid product was washed with anhydrous hexane (6x100 mL) at 60°C six times.

### (2) Polymerization and preparation of composition

### [Polymerization Example 1]

The propylene resin composition according to the present invention was prepared by the following process:
The solid catalyst was put into contact with triethylaluminum (TEAL) and dicyclopentyldimethoxysilane (DCPMS) at a mass ratio of TEAL to the solid catalyst of 18:1 and a mass ratio of TEAL/DCPMS of 10:1 at room temperature for five minutes. The resulting catalyst composition was kept suspended in liquid propylene at 20°C for five minutes to perform pre-polymerization.

The obtained pre-polymerized product was introduced into a first polymerization reactor to prepare a propylene homopolymer. The propylene homopolymer was then introduced into a second polymerization reactor to prepare a propylene-ethylene copolymer through polymerization. The ethylene concentration in the second polymerization reactor and the hydrogen concentrations in the first and second polymerization reactors (hydrogen was used to adjust XSIV and MFR) were set as shown in Table 1, and the polymerization temperature and pressure were adjusted to prepare a polypropylene polymer. An antioxidant B255 available from BASF SE (0.2 wt%) and a calcium stearate neutralizer available from TANNAN KAGAKU KOGYO CO., LTD. (0.05 wt%) were compounded with the polypropylene polymer, and were mixed with stirring in a Henschel mixer for one minute. The mixture was extruded with an NVC single screw extruder with a diameter of 50 mm available from Nakatani Machinery Ltd. at a cylinder temperature of 230°C. The strand was cooled in water, and was cut with a pelletizer to prepare a propylene resin composition in the form of pellets.

### [Polymerization Example 2]

The hydrogen concentration in the second polymerization reactor was changed to adjust the XSIV and the MFR of the propylene resin composition (Polymerization Example 2). The hydrogen concentration in the second polymerization reactor was determined in consideration of the ethylene concentration in the polymerization reactor.

### [Comparative Polymerization Example 1]

The hydrogen concentration in the first polymerization reactor was changed to adjust the MFR of the propylene resin composition. A propylene resin composition having an MFR outside of the range specified in the present invention was prepared.

### [Comparative Polymerization Examples 2 and 3]

Propylene resin compositions outside of the ranges specified in the present invention were prepared. In Comparative Polymerization Example 2, polymerization was performed as in Polymerization Example 1 except that the polymerization catalyst used was a diether solid catalyst, and the hydrogen concentration in the first polymerization reactor and the ethylene concentration in the second polymerization reactor were varied as shown in Table 1. The solid catalyst used in Comparative Polymerization Example 2 was prepared by the method described in Example 1 of European Patent Application Publication No. 728769 as follows:
TiCl₄ (225 mL) at 0°C was placed in a 500 mL cylindric glass reactor with a filtration barrier, and microspheroidal MgCl₂·2.1C₂H₅OH (10.1 g, 54 mmol) prepared as below was added with stirring in 15 minutes. After the solution was heated to 70°C, 9,9-bis(methoxymethyl)fluorene (9 mmol) was added. The solution was heated to 100°C. Two hours later, TiCl₄ was removed by filtration. TiCl₄ (200 mL) and 9,9-bis(methoxymethyl)fluorene (9 mmol) were added, were kept at 120°C for one hour, and were filtered. TiCl₄ (200 mL) was further added, and the solution was further treated at 120°C for one hour. Finally, the solution was filtered, and the filtrate was washed with n-heptane at 60°C until chlorine ions were completely removed from the filtrate. The resulting catalyst component contained 3.5 wt% Ti and 16.2 wt% 9,9-bis(methoxymethyl)fluorene. Microspheroidal MgCl₂·2.1C₂H₅OH was prepared as follows. Under an inert gas at room temperature, anhydrous MgCl₂ (48 g), anhydrous C₂H₅OH (77 g), and kerosene (830 mL) were placed in a 2-L autoclave equipped with a turbine agitator and a drawing pipe. The solution was heated to 120°C with stirring to produce an adduct of MgCl₂ and alcohol. The adduct was melted, and was mixed with the dispersant. The pressure of nitrogen in the autoclave was kept at 15 atmospheric pressures. The drawing pipe attached to the autoclave was externally heated to 120°C with a heating jacket. The drawing pipe has an inner diameter of 1 mm, and a length of 3 m. The mixture was flowed through the pipe at 7 m/sec. At the outlet of the pipe, the dispersion was extracted, with stirring, into a 5-L flask containing kerosene (2.5 L) and externally cooled with a jacket kept such that the initial temperature of the dispersion was -40°C. The final temperature of the dispersion was 0°C. A spherical solid product contained in the dispersed phase of the emulsion was sedimented, was separated by filtration, was washed with heptane, and was dried. These operations were all performed in an inert gas atmosphere. Solid spherical particulate MgCl₂·3C₂H₅OH (130 g) having the largest diameter of 50 µm or less was prepared. The product was gradually heated from 50°C to 100°C in a nitrogen current to remove alcohol from the product until the alcohol content per mol of MgCl₂ was reduced to 2.1 mol.

Comparative Polymerization Example 3 was performed as in Comparative Polymerization Example 2 except that the hydrogen concentration in the second polymerization reactor was varied and the XSIV of the propylene resin composition was varied.

The propylene resin compositions prepared in Polymerization Examples 1 and 2 and Comparative Polymerization Examples 1 to 3 were extruded by T-die extrusion into sealant films having a thickness of 60 µm.

Table 1 shows the properties of the propylene resin compositions prepared in Polymerization Examples (Examples 1 and 2) and Comparative Polymerization Examples (Comparative Examples 1 to 3) i.e., melt flow rate [MFR], content [BIPO] of the copolymer in the propylene resin composition, content [PC] of propylene in the copolymer, intrinsic viscosity [XSIV] of the xylene-soluble content in the propylene resin composition, molecular weight distribution [Mw/Mn] of the xylene-insoluble content, and extrusion stability), and the properties of the films (seal strength, impact resistance, wetting tension, and the number of fish eyes generated).

**[Table 1]**

| | Example 1 | Example 2 | Comparative Example 1 | Comparative Example 2 | Comparative Example 3 |
|---|---|---|---|---|---|
| Polymer | Polymerization Example 1 | Polymerization Example 2 | Comparative Polymerization Example 1 | Comparative Polymerization Example 2 | Comparative Polymerization Example 3 |
| Catalyst | Succinate | Succinate | Succinate | Diether | Diether |
| Hydrogen concentration in first stage (mol %) | 0.40 | 0.40 | 0.65 | 0.16 | 0.16 |
| Hydrogen concentration in second stage (mol %) | 1.69 | 2.43 | 1.68 | 1.70 | 0.94 |
| Ethylene concentration in second stage C2/(C2+C3) (mol %) | 30.5 | 31.1 | 29.7 | 35.2 | 34.9 |
| MFR [g/10 min] | 2.3 | 3.2 | 6.7 | 3.0 | 2.8 |
| BIPO [wt%] | 28.5 | 27.0 | 26.6 | 25.3 | 24.6 |
| PC [wt%] | 61.5 | 62.3 | 62.5 | 57.6 | 57.8 |
| XSIV [dL/g] | 2.4 | 2.0 | 2.3 | 2.0 | 2.5 |
| Mw/Mn | 7.8 | 7.6 | 8.0 | 5.2 | 4.9 |
| Extrusion | T-die | T-die | T-die | T-die | T-die |
| Extrusion stability | A | A | A | B | B |
| Seal strength (170°C) [N/15 mm] | 54.1 | 41.3 | 53.2 | 32.9 | 51.8 |
| Impact resistance (-5°C) [kJ/m] | 29.0 | 27.4 | 18.9 | 28.4 | 27.7 |
| Wetting tension (after storage) [mN/m] | 43 | 39 | 42 | 39 | 42 |
| The number of fish eyes (0.1 mm or less) /0.1 m² | 2.3 | 2.6 | 2.0 | 10.9 | 14.2 |

The propylene resin compositions according to the present invention had higher extrusion stability than the propylene resin compositions in Comparative Examples. In Comparative Examples 2 and 3, a fluctuation in the width of the film was found during extrusion of the propylene resin compositions. While the impact resistance and the wetting tension of the sealant films in Examples of the present invention did not significantly differ from those in Comparative Examples, the impact resistance of the sealant film in Comparative Example 1 was inferior due to the high MFR of the propylene resin composition. The number of fish eyes generated in the sealant films prepared with the propylene resin compositions in Examples were significantly smaller than the number of fish eyes generated in the sealant films prepared with the propylene resin compositions in Comparative Examples excluding Comparative Example 1.

### [Examples 3 and 4 and Comparative Examples 4 to 6]

The propylene resin compositions prepared in Polymerization Examples 1 and 2 and Comparative Polymerization Examples 1 to 3 were processed by inflation process into sealant films having a thickness of 60 µm.

The properties of the propylene resin compositions prepared in Polymerization Examples and Comparative Polymerization Examples and the properties of the films are shown in Table 2 as Examples 3 and 4 and Comparative Examples 4 to 6.

**[Table 2]**

| | Example 3 | Example 4 | Comparative Example 4 | Comparative Example 5 | Comparative Example 6 |
|---|---|---|---|---|---|
| Polymer | Polymerization Example 1 | Polymerization Example 2 | Comparative Polymerization Example 1 | Comparative Polymerization Example 2 | Comparative Polymerization Example 3 |
| Catalyst | Succinate | Succinate | Succinate | Diether | Diether |
| Hydrogen concentration in first stage (mol %) | 0.40 | 0.40 | 0.65 | 0.16 | 0.16 |
| Hydrogen concentration in second stage (mol %) | 1.69 | 2.43 | 1.68 | 1.70 | 0.94 |
| Ethylene concentration in second stage C2/(C2+C3) (mol %) | 30.5 | 31.1 | 29.7 | 35.2 | 34.9 |
| MFR [g/10 min] | 2.3 | 3.2 | 6.7 | 3.0 | 2.8 |
| BIPO [wt%] | 28.5 | 27.0 | 26.6 | 25.3 | 24.6 |
| PC [wt%] | 61.5 | 62.3 | 62.5 | 57.6 | 57.8 |
| XSIV [dL/g] | 2.4 | 2.0 | 2.3 | 2.0 | 2.5 |
| Mw/Mn | 7.8 | 7.6 | 8.0 | 5.2 | 4.9 |
| Process | Inflation | Inflation | Inflation | Inflation | Inflation |
| Extrusion stability | A | A | C | B | B |
| Seal strength (170°C) [N/15 mm] | 53.5 | 42.0 | - | 34.0 | 52.7 |
| Impact resistance (-5°C) [kJ/m] | 28.9 | 27.4 | - | 28.0 | 26.0 |
| Wetting tension (after storage) [mN/m] | 41 | 40 | - | 41 | 41 |
| The number of fish eyes (0.1 mm or less) /0.1 m² | 1.9 | 1.5 | - | 9.9 | 10.0 |

The propylene resin compositions according to the present invention had high extrusion stability than that of the propylene resin compositions in Comparative Examples. Unstable bubbles were slightly found during inflation process of the propylene resin compositions in Comparative Polymerization Examples 2 and 3. Unstable bubbles were significantly found during inflation process of the propylene resin composition in Comparative Polymerization Example 1, and no sample film was produced. The impact resistance and the wettability of the films produced by inflation process exhibited the same tendencies as in those of the films produced by T-die extrusion. The number of fish eyes generated in the sealant films prepared with the propylene resin compositions in Examples were significantly smaller than the number of fish eyes generated in the sealant films prepared with the propylene resin compositions in Comparative Examples.

### [Comparative Polymerization Examples 4 and 5]

The same solid catalyst used in Comparative Polymerization Examples 2 and 3 was used and the hydrogen concentration in the first polymerization reactor was varied to prepare propylene resin compositions having MFRs outside of the range specified in the present invention. These propylene resin compositions were used to prepare sealant films having a thickness of 60 µm by T-die extrusion and inflation process.

### [Comparative Polymerization Examples 6 and 7]

The propylene resin compositions outside of the ranges specified in the present invention were prepared. In Comparative Polymerization Example 6, polymerization was performed in the presence of a solid phthalate polymerization catalyst. The solid catalyst used in Comparative Polymerization Example 6 was prepared by the method disclosed in European Patent No. 674991 as follows:

Anhydrous magnesium chloride (48 g), anhydrous ethyl alcohol (77 g), and kerosene (830 mL) were introduced into a 2-L autoclave equipped with a turbine agitator and a drawing tube under an inert gas at room temperature. The solution in the autoclave was heated to 120°C under agitation to produce an adduct of MgCl₂ and alcohol. The adduct was melted and dispersed in kerosene. The pressure of nitrogen in the autoclave was kept at 15 atmospheric pressures. The drawing tube attached to the autoclave was externally heated to 120°C with a heating jacket. The heating jacket had an inner diameter of 1 mm and a length of 3 m. The dispersion was flowed into the tube at about 7 m/sec. At the outlet of the tube, the dispersion was collected in a 5-L flask under agitation (the flask contained kerosene (2.5 L), and was externally cooled with a jacket kept such that the initial temperature of the dispersion was -40°C). The final temperature of the dispersion was 0°C. The spherical solid product contained in the dispersed phase of the dispersion was sedimented, and was filtered. The solid product was washed with an aliquot of hexane, and was dried for separation. All of these steps were performed in a nitrogen gas atmosphere. A solid spherical particulate adduct of MgCl₂·3C₂H₅OH (130 g) having the largest diameter of less than 50 µm was prepared. The solid adduct was vacuum dried for two hours. The dried solid adduct had a weight of 105 g. The solid product was heated to about 60°C in a nitrogen stream to partially remove alcohol from the adduct. An MgCl₂·2.1C₂H₅OH adduct was prepared. In the next step, this adduct was used to prepare a solid catalyst as follows. TiCl₄ (625 mL), and then the MgCl₂·2.1C₂H₅OH adduct (25 g) were placed in a 1-L glass flask equipped with a condenser, a mechanical agitator, and a thermometer at 0°C in an anhydrous nitrogen atmosphere. The solution in the flask was heated to 100°C over one hour. When the temperature reached 40°C, diisobutyl phthalate (9 mmol) was introduced into a flask. After the solution was kept at 100°C for two hours, the product was sedimented, and the liquid was siphoned out. TiCl₄ (550 mL) was added, and the liquid was heated to 120°C for one hour. The product was then sedimented, and the liquid was siphoned out. The solid residue was washed with anhydrous hexane (200 cc) at 60°C six times, and at room temperature three times to prepare a solid catalyst.

The solid catalyst, TEAL, and DCPMS were put into contact with each other at room temperature for five minutes at a mass ratio of TEAL to the solid catalyst of 18:1 and a mass ratio of TEAL/DCPMS of 10:1. The resulting catalyst was kept suspended in liquid propylene at 20°C for five minutes for pre-polymerization. This product was introduced into a polymerization reactor, and polymerization was performed as in Example 1 to prepare a polypropylene polymer. A polypropylene resin composition was prepared as in Example 1 from the polypropylene polymer.

Comparative Polymerization Example 7 was performed as in Comparative Polymerization Example 6 except that the hydrogen concentrations in the first and second polymerization reactors were varied, and the XSIV and the MFR of the propylene resin composition were varied.

The properties of the propylene resin compositions in Comparative Polymerization Examples and the properties of the films are shown in Table 3 as Comparative Examples 7 to 11.

**[Table 3]**

| | Comparative Example 7 | Comparative Example 8 | Comparative Example 9 | Comparative Example 10 | Comparative Example 11 |
|---|---|---|---|---|---|
| Polymer | Comparative Polymerization Example 4 | Comparative Polymerization Example 4 | Comparative Polymerization Example 5 | Comparative Polymerization Example 6 | Comparative Polymerization Example 7 |
| Catalyst | Diether | Diether | Diether | Phthalate | Phthalate |
| Hydrogen concentration in first stage (mol %) | 0.23 | 0.23 | 0.10 | 0.18 | 0.13 |
| Hydrogen concentration in second stage (mol %) | 1.00 | 1.00 | 2.60 | 1.52 | 3.80 |
| Ethylene concentration in second stage C2/(C2+C3) (mol %) | 28.7 | 28.7 | 31.7 | 32.3 | 29.6 |
| MFR [g/10 min] | 6.0 | 6.0 | 1.0 | 2.0 | 1.2 |
| BIPO [wt%] | 27.9 | 27.9 | 26.8 | 27.0 | 26.8 |
| PC [wt%] | 63.0 | 63.0 | 61.5 | 67.9 | 68.9 |
| XSIV [dL/g] | 2.4 | 2.4 | 1.6 | 2.4 | 1.8 |
| Mw/Mn | 4.7 | 4.7 | 5.1 | 5.9 | 6.3 |
| Process | T-die extrusion | Inflation process | T-die extrusion | T-die extrusion | Inflation process |
| Extrusion stability | A | C | B | A | A |
| Seal strength (170°C) [N/15 mm] | 40.5 | - | 10.3 | 40.0 | 38.0 |
| Impact resistance (-5°C) [kJ/m] | 10.8 | - | 28.5 | 28.0 | 30.0 |
| Wetting tension (after storage) [mN/m] | 40 | - | ≤ 36 | 38 | ≤ 36 |
| The number of fish eyes (0.1 mm or less) /0.1 m² | 26.0 | - | 8.8 | 7.5 | 5.0 |

Although the propylene resin composition in Comparative Polymerization Example 4 was extruded by T-die extrusion into films without problem, the films (Comparative Example 7) had low impact resistance and a number of fish eyes.

The propylene resin composition in Comparative Polymerization Example 4 had unstable bubbles and was not shaped into a film by inflation process (Comparative Example 8).

The propylene resin composition in Comparative Polymerization Example 5 applied a large load to a motor during extrusion, and the amount of the resin composition extruded was fluctuated. The films (Comparative Example 9) had low seal strength and low wetting strength.

Although the propylene resin composition in Comparative Polymerization Example 6 was extruded by T-die extrusion into films without problem, the films (Comparative Example 10) had lower seal strength and wetting strength and a slightly larger number of fish eyes than in Example 1 or 2.

Although the propylene resin composition in Comparative Polymerization Example 7 was processed by inflation process into films without problem, the films (Comparative Example 11) had lower seal strength and wetting strength and a slightly larger number of fish eyes than in Examples 3 and 4.

## Claims

1. A propylene resin composition, comprising:
a propylene homopolymer, and
a propylene-ethylene copolymer dispersed in the propylene homopolymer, the propylene resin composition being prepared through polymerization of propylene and ethylene in the presence of a catalyst comprising:
(A) a solid catalyst containing, as essential components, magnesium, titanium, halogen, and an electron donor selected from succinate type compounds,
(B) an organoaluminum compound, and
(C) an external electron donor selected from silicon compounds,
wherein the propylene resin composition contains 25 to 35 wt% ethylene-propylene copolymer,
the copolymer contains 60 wt% or more propylene,
the propylene resin composition contains a xylene-soluble content having an intrinsic viscosity [η] of 1.8 to 3.2 dl/g, and
the propylene resin composition has a melt flow rate of 2.0 to 5.0 g/10 min.

2. A sealant film for retort pouch-packaging films, prepared with the propylene resin composition according to claim 1.

## Patentansprüche

1. Propylenharzzusammensetzung, umfassend:
ein Propylenhomopolymer und
ein Propylen-Ethylen-Copolymer, das in dem Propylenhomopolymer dispergiert ist, wobei die Propylenharzzusammensetzung durch Polymerisation von Propylen und Ethylen in Gegenwart eines Katalysators hergestellt ist, umfassend:
(A) einen festen Katalysator, der als wesentliche Komponenten Magnesium, Titan, Halogen und einen Elektronendonor ausgewählt aus Verbindungen vom Succinattyp enthält,
(B) eine Organoaluminiumverbindung und
(C) einen externen Elektronendonor, ausgewählt aus Siliciumverbindungen,
wobei die Propylenharzzusammensetzung 25 bis 35 Gew.% Ethylen-Propylen-Copolymer enthält,
das Copolymer 60 Gew.% oder mehr Propylen enthält,
die Propylenharzzusammensetzung einen Gehalt an xylollöslichem Material mit einer Grenzviskosität [η] von 1,8 bis 3,2 dl/g enthält, und
die Propylenharzzusammensetzung eine Schmelzflussrate von 2,0 bis 5,0 g/10 Min aufweist.

2. Siegelfolie für Retortenbeutel-Verpackungsfolien, hergestellt mit der Propylenharzzusammensetzung nach Anspruch 1.

## Revendications

1. Composition de résine de propylène, comprenant :
un homopolymère de propylène, et
un copolymère de propylène-éthylène dispersé dans l'homopolymère de propylène, la composition de résine de propylène étant préparée par polymérisation de propylène et d'éthylène en présence d'un catalyseur comprenant :
(A) un catalyseur solide contenant, en tant que composants essentiels, du magnésium, du titane, un halogène, et un donneur d'électrons choisi parmi des composés de type succinate,
(B) un composé organique de l'aluminium, et
(C) un donneur externe d'électrons choisi parmi des composés de silicium,
où la composition de résine de propylène contient 25 à 35 % en poids de copolymère d'éthylène-propylène,
le copolymère contient 60 % en poids ou plus de propylène,
la composition de résine de propylène contient une teneur en matières solubles dans le xylène ayant une viscosité intrinsèque [η] de 1,8 à 3,2 dl/g, et
la composition de résine de propylène a un indice de fluidité à chaud de 2,0 à 5,0 g/10 min.

2. Film d'étanchéité pour films d'emballage en sachet stérilisable en autoclave, préparé avec la composition de résine de propylène selon la revendication 1.
